# NEW EUROPEAN PATENT SPECIFICATION

(11) **EP 0 970 620 B2**
(45) Date of publication and mention of the opposition decision: **11.11.2009**
(45) Mention of the grant of the patent: 30.06.2004
(21) Application number: 99202155.0
(22) Date of filing: 02.07.1999
(51) Int. Cl.: A23L 1/40

(54) **Soup and sauce concentrates**
Sossen- und Suppenkonzentrat
Concentrés pour soupes et sauces

(30) Priority: 09.07.1998 EP 98202330
(43) Date of publication of application: 12.01.2000
(73) Proprietor: Unilever N.V., 3013 AL Rotterdam (NL); Unilever PLC, London Greater London EC4P 4BQ (GB)
(72) Inventor: Kuil, Gijsbert, Unilever Research Vlaardingen, 3133 AT Vlaardingen (NL); Mulder, Johannes Frederik, 3133 AT Vlaardingen (NL)
(74) Representative: Wurfbain, Gilles L.

(56) References cited:
- EP-A- 0 166 284
- EP-A- 0 835 614
- WO-A-92/07475
- WO-A-96/29894
- US- - 4 291 066
- US-A- 4 140 808
- US-A- 4 237 146
- US-A- 4 387 109
- US-A- 4 746 524

## Description

### Field of the invention

The present invention relates to ambient stable concentrates which yield, upon dilution with an aqueous liquid, a finished sauce, soup or gravy.

### Background of the invention

Many products have been developed in the past intended as a concentrated sauce or soup product, which could be turned into a soup or sauce by the user by dilution with water.

US 5,332,585, US 4,468,551, US 4,363,824 describe a process for the preparation of dry, granular soup- or sauce concentrates.

US 3,996,993 and GB 1355907 describe soup- and sauce concentrates in the form of solid bars or blocks. US 3,652,299 describe similar compositions in the form of pellets and beads.

US 4,612,197 (or the equivalent EP 166 284) describes a sauce enhancer in tubes. The product disclosed is intended as a medium through which butter, egg, cream and other ingredients can be added to already prepared soups and sauces in order to improve consistency, flavour and appearance. The compositions disclosed contain egg yolk, cream, butter fat, salt, flavourings. Some compositions. contain skim milk powder, kappa-carrageenan, or modified potato starch.

EP 835614 describes a sauce aid in the form of an oil-in-water emulsion containing besides oil and water ungelatinised starch and a vegetable powder in a finely divided form. Emulsifiers are reported to be undesired in such formulations.

US-A-4,746,524 describes a method for formulating sauces and dressings that resist the growth of microorganisms therein comprising lowering the pH and the water activity of the ingredients used to prepare sauces and dressings.

WO 92 07475 discloses calcium fortified sauces and salad dressings having a low pH and comprising fat, starches, egg yolk, flavourig material and salt.

US 4,4140,808 discloses emulsified oil dressing products having a low pH and comprising fat, starch, egg yolk, flavours and salt.

The products as described above are either difficult to dose because of their solid form, are not ambient stable products or products which have only ambient stability up till the moment of use or do not give a finished sauce or soup with sufficient thickening.

WO 96 29894 describes a fat continuous soup or sauce concentrates which are substantially free of trans fatty acids comprising fat, starches, flavour, egg yolk based emulsifiers and proteins. The products of that composition are reported to be microbially stable upon partial use if stored at chilled temperatures.

### Summary of the invention

There has been a demand for concentrated base products which would be convenient in use, yield a finished sauce, soup or gravy only by dilution with water or an aqueous liquid. The composition should be such that there is no need to add other components besides water to arrive at a fully structured and finished sauce, although it should not be excluded. Also, said product should be microbial stable under room temperature, preferably even after opening the packed product. Preferably, the product should also be physically stable under ambient conditions (i.e. no substantial oil exudation or phase separation). The product should preferably be pourable, squeezable or spoonable.

It has now been found that the above objectives could be fulfilled (in full or in part) by a concentrated soup- or sauce base, comprising (in percentages by weight):
a. fat or oil, in an amount between 20 and 60%
b. starch-based thickener, in an amount of 1-30%
c. water, in amount of 10-55%
d. egg-yolk based emulsifier, in an amount of 0.5-6%
e. at least one water-activity-lowering component
f. flavouring composition, in an amount of 1-35%,
g. optionally acids
wherein the amount of the water-activity-lowering component(s) is such that the composition has a water activity of below 0.92 and wherein salt and starch are present in a ratio from 1:05 to 1:7, and wherein the composition is an oil in water emulsion (O/W).

### Detailed description of the invention

The above concentrated compositions can be turned into a sauce or soup just by diluting with hot or cold water or an aqueous liquid such as e.g. wine, milk, water which is used for cooking meat or vegetables or mixtures thereof. Some stirring will generally be needed to obtain a homogeneous mixture. Heating will generally be desired to obtain the right consistency.

Although several water-activity reducing compounds as known in the art may be used for achieving the desired water activity, it is preferred (e.g. from a flavour point of view) that at least a certain amount of salt is present. Finished soups and sauces generally contain the same amount of salt (about 0.5-1.5%). Hence, the amount of salt present will determine the dilution factor to obtain a finished soup or sauce having the right quantity of salt. For example, a concentrated base product containing 4% of salt will e.g. be diluted using one part concentrated base composition and three parts water.

Next to salt, various sugars may be used to reduce the water activity. The amount of sugars and salt to be used will, apart from the desired water activity, also depend on the flavour to be achieved. Sugars (such as sucrose) may be used in amounts of 0.1-25%, preferably 1-15%.

The dilution factor and the amount of starch-based thickener will then determine whether a thick, creamy soup is obtained or a thick, creamy sauce is obtained. Finished soup will require typically 0.25-3% starch, whereas a sauce typically requires 1-6% of starch, depending on the type of starch used. The amount of starch-based thickener in the concentrated base product is preferably at least 2% and at most 25% by weight.

Following the above, in the compositions according to the invention the ratio salt:starch will typically be for soups preferably from 1:0.5 to 1:4. For sauces the ratio salt:starch will from 1:1 to 1:3 typically be for soups from 1:2 to 1:7 preferably from 1:3 to 1:5.

In order to achieve the desired content of salt on dilution of the concentrates according to the invention these concentrates contain preferably at least 3% of salt, or even 5% of salt, depending on the desired thickness in combination with dilution factor. The high content of salt will reduce the water activity Aw, thereby increasing the microbial stability at ambient conditions. The conditions are chosen such that the water activity is less then 0.92, more preferably less than 0.9. The Aw should preferably be at least 0.65. Most preferred is a water activity on between 0.70 and 0.90.

The microbial stability is also enhanced by reducing the pH. Preferably the pH is less than 5.5, more preferably less than 5.0. The pH is preferably at least 3.5, more preferably at least 4.0. Such a pH may be obtained by incorporating acids like acetic acid, lactic acid, citric acid and the like in these compositions, in an amount sufficient to obtain the desired pH.

In the concentrated soup- or sauce base according to the invention the amount of fat or oil is at least 20% and at most 60% by weight. Generally speaking, the higher the amount of oil or fat present the lower the amount of water. Water is preferably present in an amount of at least 15% and at most 40% by weight.

In order to get the desired taste, consistency, and homogeneity the amount of egg yolk-based emulsifier in the concentrated soup- or sauce base is preferably at least 2% and at most 6% by weight.

The end-users may add their own flavouring substances, but it is necessary to incorporate already in the concentrated soup- or sauce base a substance imparting flavour and/or aroma. These can be the known substances like herbs and spices, (ground) nuts and seeds, soy sauce, seasonings, flavouring oils, chopped vegetables (e.g. onions and garlic), wine etcetera. Also, to give a specific sauce or soup like e.g. mushroom-, tomato-, mustard-soup or -sauce, the (chopped) components like mushrooms, tomatoes, tomato paste, cream, mustard etceterea may also be incorporated in the compositions. Generally such compounds will be added in amounts 4 and 15% by weight, but in the case of e.g. soy sauce, this may be incorporated in the composition in amounts of 1-25%.

Although it is not preferred that all starch is already in its swollen state in the concentrated base product, as it would have a too thick consistency to be conveniently used, it may be preferred, depending upon the amount of oil and water used and the packaging used that at least part of the starch (e.g. 0.5-5% of the starch) is in its swollen state. The remainder of the starch will be swollen upon heating the concentrated base product in use, simultaneous or prior to diluting the concentrated base product.
For maximum convenience, the soup- or sauce base according to the invention is preferably in a pourable or spoonable form. This will enable the product to be packed in (glass) jars, bottles (plastic and glass), tubs, etcetera.

As both oil/fat and water are present and a homogeneous product will be desired, the product will be in the form of an emulsion. The composition is an oil in water emulsion (O/W).

The concentrated base products according to the invention as described above may be used to prepared a ready-to-eat finished sauce by mixing it with an aqueous liquid, in a ratio of 1 part sauce base and between 2 and 7 parts aqueous liquid. The actual ratio will depend on factors as described above (amount of salt and thickener present and desired end result). Dilution may be effected using an aqueous liquid, such as water, wine, milk, cream, fruit and vegetable juices, liquid in which vegetables, meat or fish has been cooked, etcetera or any mixture thereof. Other dilution rates may be used if so desired.

Likewise, the concentrated base products according to the invention as described above may be used to prepared a ready-to-eat finished soup by mixing it with an aqueous liquid, in a ratio of 1 part sauce base and between 4 and 10 parts aqueous liquid. The actual ratio will depend on factors as described above (amount of salt and thickener present and desired end result). Dilution may be effected in the way as with sauces described above. Other dilution rates may be used if so desired.

The invention is further exemplified by the following examples, which are to be understood as to be non-limiting.

### Examples

Oil in water emulsions were prepared having the following compositions (in percentage by weight):

| | **comp. A** | **comp. B** | **Comp. C** |
|---|---|---|---|
| Vegetable oil | 20 | 40 | 60 |
| Starch | 24 | 18 | 12 |
| Flavour mix | 8 | 6 | 4 |
| Egg yolk (92/8) | 2 | 4 | 6 |
| Salt | 6 | 4.5 | 3 |
| Water | 40 | 27.5 | 15 |
| | 100 % | 100 % | 100 % |

In the above, the vegetable oil used was soy bean oil. The starch was modified corn starch (Colflo 67, ex National Starch)
The flavour mix was composed of vegetable flavour, sugar, whitewine flavour, garlic powder, white pepper and citric acid.
The egg yolk was pasteurised stabilised egg yolk (treated with lecithase L-10 as known in the art) and consisted of 92% egg yolk and 8% salt.
Salt was ordinary kitchen salt.

Composition A was prepared by:
- mixing all ingredients (except oil and starch), heat to 85°C, keep for 3 minutes and cool to less than 20°C.
- oil and starch were mixed to form a slurry and added under constant mixing
- the product was homogenised in a colloid mill.

Compositions B and C were prepared by
- mixing all ingredients (except oil and starch), heat to 85°C, keep for 3 minutes and cool to less than 20°C.
- addition of half of the oil under constant mixing
- homogenise in a colloid mill
- the remainder of the oil was mixed with the starch to form a slurry and added to the rest of the formulation under constant mixing.

The above compositions appeared to have a water activity of around 0.85 and a pH of 4.7-4.8. All compositions A, B and C appeared physically and microbial stable for at least one month. Compositions B and C had paste-like consistency, composition A had a liquid consistency.

The compositions could be turned into ready to eat sauces of high quality by diluting them with water under heating and stirring for a few minutes.

Dilution factors:
one part composition A in 5 parts water
one part composition B in 3.5 parts water
one part composition C in 2 parts water.

## Claims

1. Concentrated Soup- or sauce base, comprising (in percentages by weight):
a. fat or oil, in an amount between 20 and 60%
b. starch-based thickener, in an amount of 1-30%
c. water, in amount of 10-55%
d. egg-yolk based emulsifier, in an amount of 0.5-6%
e. at least one water-activity-lowering component
f. flavouring composition, in an amount of 1-35%,
g. optionally acids
wherein the amount of the water-activity-lowering component(s) is such that the composition has a water activity of below 0.92 and wherein salt and starch are present in a ratio from 1:0.5 to 1:7, and wherein the composition is an oil in water emulsion (O/W).

2. Soup- or sauce base according to claim 1, wherein salt and starch are present in a ratio of between 1:2 and 1:5.

3. Soup- or sauce base according to claim 1, wherein the water-activity lowering component comprises salt in an amount of at least 3% based on the final sauce- or soup base.

4. Soup- or sauce base according to claim 1, wherein the water-activity lowering component comprises a sugar in an amount of 0.1-25% based on the final sauce- or soup base.

5. Soup- or sauce base according to claim 1, wherein the amount of thickener is between 2 and 25%

6. Soup or sauce base according to claim 1, wherein the water activity is between 0.70 and 0.90.

7. Soup- or sauce base according to claim 1, wherein the pH is below 5.5.

8. Soup- or sauce base according to claim 1, wherein the amount of water is between 15 and 40%.

9. Soup- or sauce base according to claim 1, wherein the amount of egg yolk-based emulsifier is between 2 and 6%.

10. Soup- or sauce base according to claim 1, wherein the amount of flavouring components is between 4 and 15% by weight.

11. Soup- or sauce base according to claim 1, containing from 1-25% by weight soy sauce.

12. Soup- or sauce base, according to claim 1, wherein the starch-based thickener contains 0.5-5% swollen starch.

13. Soup- or sauce base according to claim 1, wherein the composition is in a pourable or spoonable form.

14. Process for preparing a ready-to-eat sauce, wherein a soup- or sauce base according to any of claims 1-13 is mixed with an aqueous liquid, in a ratio of 1 part sauce base and between 2 and 7 parts aqueous liquid.

15. Process for preparing a ready-to-eat soup, wherein a soup- or sauce base according to any of claims 1-13 is mixed with an aqueous liquid, in a ratio of 1 part sauce base and between 4 and 10 parts aqueous liquid.

## Patentansprüche

1. Konzentrierte Suppen- oder Saucen-Basis, umfassend (in Gewichtsprozent):
a. Fett oder Öl, in einer Menge zwischen 20 und 60 %,
b. Verdickungsmittel auf Stärke-Basis, in einer Menge von 1-30%,
c. Wasser in einer Menge von 10-55%
d. Emulgator auf Eidotter-Basis, in einer Menge von 0,5-6%
e. mindestens einen die Wasseraktivität senkenden Bestandteil
f. Geschmacksstoffzusammensetzung in einer Menge von 1-35%
g. gegebenenfalls Säuren
wobei die Menge des (der) die Wasseraktivität senkenden Bestandteils (Bestandteile) derart ist, dass die Zusammensetzung eine Wasseraktivität von unter 0,92 hat, und worin Salz und Stärke in einem Verhältnis von 1:0,5 bis 1:7 vorliegen, und wobei die Zusammensetzung eine Öl-in-Wasser-Emulsion (O/W) ist.

2. Suppen- oder Saucen-Basis nach Anspruch 1, wobei Salz und Stärke in einem Verhältnis von zwischen 1:2 und 1:5 vorhanden sind.

3. Suppen- oder Saucen-Basis nach Anspruch 1, wobei der die Wasseraktivität senkende Bestandteil Salz in einer Menge von mindestens 3%, bezogen auf die endgültige Saucen- oder Suppen-Basis, umfasst.

4. Suppen- oder Saucen-Basis nach Anspruch 1, wobei der die Wasseraktivität senkende Bestandteil einen Zucker in einer Menge von 0,1-25%, bezogen auf die endgültige Saucen- oder Suppen-Basis, umfasst.

5. Suppen- oder Saucen-Basis nach Anspruch 1, wobei die Menge an Verdickungsmittel zwischen 2 und 25% beträgt.

6. Suppen- oder Saucen-Basis nach Anspruch 1, wobei die Wasseraktivität zwischen 0,70 und 0,90 ist.

7. Suppen- oder Saucen-Basis nach Anspruch 1, wobei der pH-Wert unter 5,5 liegt.

8. Suppen- oder Saucen-Basis nach Anspruch 1, wobei die Menge an Wasser zwischen 15 und 40% beträgt.

9. Suppen- oder Saucen-Basis nach Anspruch 1, wobei die Menge an Emulgator auf Eidotter-Basis zwischen 2 und 6% beträgt.

10. Suppen- oder Saucen-Basis nach Anspruch 1, wobei die Menge an Geschmacksstoff-Bestandteilen zwischen 4 und 15 Gew.-% beträgt.

11. Suppen- oder Saucen-Basis nach Anspruch 1, welche von 1-25 Gew.-% Sojasauce enthält.

12. Suppen- oder Saucen-Basis nach Anspruch 1, wobei das Verdickungsmittel auf Stärke-Basis 0,5-5% gequollene Stärke enthält.

13. Suppen- oder Saucen-Basis nach Anspruch 1, wobei die Zusammensetzung in gießbarer oder löffelbarer Form vorliegt.

14. Verfahren zur Herstellung einer essbereiten Sauce, worin eine Suppen- oder Saucen-Basis nach einem der Ansprüche 1-13 mit einer wässerigen Flüssigkeit in einem Verhältnis von 1 Teil Saucen-Basis und 2 bis 7 Teilen wässeriger Flüssigkeit gemischt wird.

15. Verfahren zur Herstellung einer essbereiten Suppe, worin eine Suppen- oder Saucen-Basis nach einem der Ansprüche 1-13 mit einer wässrigen Flüssigkeit in einem Verhältnis von 1 Teil Saucen-Basis und 4 bis 10 Teilen wässeriger Flüssigkeit gemischt wird.

## Revendications

1. Concentré pour fonds de soupe ou de sauce comprenant (en pourcentages en poids) :
a. de la matière grasse ou de l'huile dans une quantité comprise entre 20 et 60 %
b. un épaississant àbase d'amidon, dans une quantité allant de 1 à30 %,
c. de l'eau, dans une quantité allant de 10 à 55 %,
d. un émulsifiant à base de jaune d'oeuf, dans une quantité allant de 0,5 à 6 %,
e. au moins un composant abaissant l'activité de l'eau,
f. une composition aromatisante, dans une quantité allant de 1 à 35 % en poids
g. optionnellement des agents acidifiants
dans lequel la quantité de composants abaissant l'activité de l'eau est telle que la composition ait une activité de l'eau inférieure à 0,92, dans lequel le sel et l'amidon sont présents dans un rapport allant de 1 pour 0,5 à 1 pour 7, et dans lequel la composition est une émulsion d'huile dans l'eau (H/E).

2. Fonds de soupe ou de sauce selon la revendication 1, dans lequel le sel et l'amidon sont présents dans un rapport compris entre 1 pour 2 et 1 pour 5.

3. Fond de soupe ou de sauce selon la revendication 1, dans lequel le composant abaissant l'activité de l'eau comprend du sel dans une quantité d'au moins 3 % sur la base de la soupe ou du fond de sauce total.

4. Fond de soupe ou de sauce selon la revendication 1, dans lequel le composant abaissant l'activité de l'eau comprend un sucre dans une quantité allant de 0,1 à 25 %, sur la base de la soupe ou du fond de soupe final.

5. Fond de soupe ou de sauce selon la revendication 1, dans lequel la quantité d'épaississant est comprise entre 2 et 25 %.

6. Fond de soupe ou de sauce selon la revendication 1, dans lequel l'activité de l'eau est comprise entre 0,70 et 0,90.

7. Fond de soupe ou de sauce selon la revendication 1, dans lequel le pH est inférieur à 5,5.

8. Fond de soupe ou de sauce selon la revendication 1, dans lequel la quantité d'eau se situe entre 15 et 40 %.

9. Fond de soupe ou de sauce selon la revendication 1, dans lequel la quantité d'émulsifiant àbase de jaune d'oeuf est comprise entre 2et 6%.

10. Fonds de soupe ou de sauce selon la revendication 1, dans lequel la quantité de composants aromatisants se situe entre 4 et 15 % en poids.

11. Fonds de soupe ou de sauce selon la revendication 1, contenant de 1 à 25 % en poids de sauce de soja.

12. Fonds de soupe ou de sauce selon la revendication 1, dans lesquels l'épaississant à base d'amidon contient de 0,5 à 5 % d'amidon gonflé.

13. Fonds de soupe ou de sauce selon la revendication 1, dans lesquels la composition se présente sous une forme pouvant être versée ou prélevée à la cuillère.

14. Procédé de préparation d'une sauce prête à consommer, dans lequel un fonds de soupe ou de sauce selon l'une quelconque des revendications 1 à 13 est mélangé avec un liquide aqueux dans un rapport de 1 partie de fonds de sauce pour entre 2 à 7 parties de liquide aqueux.

15. Procédé de préparation d'une soupe prête à consommer dans lequel un fonds de soupe ou de sauce selon l'une quelconque des revendications 1 à 13 est mélangé avec un liquide aqueux dans un rapport de 1 partie de fonds de sauce pour entre 4 et 10 parties de liquide aqueux.
